# EUROPEAN PATENT APPLICATION

(11) **EP 2 905 594 A1**
(43) Date of publication of application: **12.08.2015**
(21) Application number: 14199204.0
(22) Date of filing: 19.12.2014
(51) Int. Cl.: G01L 19/14, E03B 3/06, E02B 1/02, E04H 4/00, E04H 4/14, F03B 13/00, F04D 35/00, G01M 10/00, G01L 1/02

(54) **Experimental system for measuring wave force**

(30) Priority: 22.01.2014 KR 20140007648
(71) Applicant: Korea Institute of Ocean Science and Technology, Yuseong -gu, Daejeon 305-701 (KR)
(72) Inventor: Oh, Sang-Ho, Gyunggi-do (KR); Jang, Se-Chul, Gyunggi-do (KR); Oh, Young Min, Seoul (KR); Ji, Chang-Hwan, Seoul (KR)
(74) Representative: EP&C

(57) **Abstract**

Disclosed herein is an experimental system for measuring wave force. The experimental system includes a wave force measurement apparatus (100), a load calculation unit (200) and a display unit (300). The wave force measurement apparatus includes: a wave generation tank (110) that contains water therein and forms a water channel; a wave generator (120) generating a wave in the water contained in the wave generation tank; and a wall (150) disposed in the wave generation tank and provided with wave manometers (190) and load transducers (140). The load calculation unit (200) adds up pressures of the wave measured by the wave manometers and loads of the wave measured by the load transducers and calculates a load of the wave applied to a surface of the wall. The display unit (300) indicates a result value calculated by the load calculation unit to an experimenter.

## Description

### BACKGROUND OF THE INVENTION

### 1. Field of the Invention

The present invention relates generally to experimental systems for measuring wave force and, more particularly, to an experimental system for measuring wave force using a load transducer directly measuring wave force applied to a wall.

### 2. Description of the Related Art

Generally, not only stochastic variability in the dimensions of breakwaters but also stochastic variability in a tide level, a wave height, etc. must be considered for determining the stability of caisson breakwaters. The wave height determination falls in extreme distribution because it is typically estimated from probability distribution using the maximum annual significant wave height; however, the tide level falls in normal distribution.

Therefore, determining the stability of breakwaters must be based on a probability density function of the wave height and the tidal level.

However, conventional methods of determining the stability of a breakwater have been conducted in such a way that wave force and lift force calculated by a 50-year frequency design wave height and a design high tide level are used and uncertainty of a calculation formula is simply assumed as a normal distribution.

According to this method, the probability of failure of the breakwater is a kind of conditional failure probability because the probability of failure of the breakwater is calculated under the assumption that when a wave height is the high tide level, it reaches the 50-year frequency design wave height. Thus, this method of determining the stability of the breakwater cannot consider all stochastic variables of the design variables. The reason why the conventional method of determining the stability of the breakwater does not consider stochastic variability of the wave height is that a wave force calculation formula is a very complex nonlinear function related to a wave height, a water level, a wavelength, etc.

Furthermore, the reason is that it is not easy to apply wave force to determining the stability of the breakwater because the wave force is affected by the depth of water on the lower end of the breakwater body and the height of a crown of the breakwater.

In an effort to overcome the above problems, the present invention proposes an experimental system for measuring wave force that uses load transducers or simultaneously uses load transducers and wave manometers (pressure gauges) and directly measures wave force, thus enhancing the precision in determining a or vertical wave load, unlike the conventional method in which a or vertical load applied to a breakwater or wall is calculated by integrating values obtained using wave manometers.

### [Prior art document]

### [Patent document]

(Patent document 0001) Korean Patent Unexamined Publication No. 10-2011-0016095
(Patent document 0002) Korean Patent Unexamined Publication No. 10-2006-0103792

### SUMMARY OF THE INVENTION

Accordingly, the present invention has been made keeping in mind the above problems occurring in the prior art, and an object of the present invention is to provide an experimental system for measuring wave force that uses load transducers or simultaneously uses load transducers and wave manometers (pressure gauges) and directly measures wave force, thus enhancing the precision in determining a load, unlike the conventional method in which a load applied to a breakwater or wall is calculated by integrating values obtained using wave manometers.

In order to accomplish the above object, in an aspect, the present invention provides an experimental system for measuring wave force, including: a wave force measurement apparatus having a wave generation tank containing water therein and extending a predetermined length to form a water channel such that a wave can move in a direction along the wave generation tank, a wave generator generating the wave in the water contained in the wave generation tank, and a wall disposed in the wave generation tank on an opposite side to the wave generator at a position spaced apart from a corresponding end of the wave generation tank, the wall having a shape similar to a breakwater, with wave manometers and load transducers respectively provided on both sides of the wall, the wave manometers measuring pressure of the wave, the load transducers measuring force of the wave; a load calculation unit adding up pressures of the wave measured by the wave manometers and loads of the wave measured by the load transducers and calculating a load of the wave applied to a surface of the wall on which the wave manometers and the load transducers are disposed; and a display unit indicating a result value calculated by the load calculation unit to an experimenter.

In another aspect, the present invention provides an experimental system for measuring wave force, including: a wave force measurement apparatus having a wave generation tank containing water therein and extending a predetermined length to form a water channel such that a wave can move in a direction along the wave generation tank, a wave generator generating the wave in the water contained in the wave generation tank, and a wall disposed in the wave generation tank on an opposite side to the wave generator at a position spaced apart from a corresponding end of the wave generation tank, the wall having a shape similar to a breakwater, with load transducers provided on the wall, the load transducers measuring force of the wave; a load calculation unit adding up loads of the wave measured by the load transducers and calculating a load of the wave applied to a surface of the wall on which the load transducers are disposed; and a display unit indicating a result value calculated by the load calculation unit to an experimenter.

The wave manometers may be arranged on a front side of the wall in a longitudinal or lateral direction of the wall. Each of the wave manometers may measure pressure of the wave applied to a portion of the wall on which the wave manometer is disposed.

The load transducers may be arranged on a perimeter or a central portion of a rear side of the wall in a longitudinal or lateral direction of the wall. The load transducers measure the force of the wave applied to the surface of the wall.

Each of the load transducers may be coupled to the wall and the wave generation tank by a coupling frame.

The coupling frame may include: a first frame coupled to a first end of the load transducer, the first frame having a 'U' shape; and a second frame coupled to a second end of the load transducer, the second frame having a shape symmetrical with the first frame.

The second frame may have in a side surface thereof at least one coupling hole through which the second frame is coupled to an inner surface of the wave generation tank by a fastening member.

The first frame may have in a side surface thereof a coupling hole through which the first frame is coupled to the wall by a fastening member.

An experimental system for measuring wave force according to the present invention uses load transducers to measure the load of waves by point or area unit. Therefore, wave force substantially applied to a wall can be more precisely estimated.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a view illustrating an experimental system for measuring wave force according to an embodiment of the present invention;
FIG. 2 is a perspective view of an experimental apparatus for measuring wave force shown in FIG. 1;
FIG. 3 is a view illustrating in detail a wave generator shown in FIG. 2;
FIG. 4 is a view showing an embodiment of a wall provided with wave manometers according to the present invention;
FIG. 5 is a view showing an embodiment of a wall provided with loads transducer according to the present invention;
FIG. 6 is an enlarged view of portion A of FIG. 1; and
FIG. 7 is an enlarged view illustrating an loads transducer according to the present invention.

### DESCRIPTION OF THE PREFERRED EMBODIMENTS

Hereinafter, embodiments of the present invention will be described with reference to the attached drawings. If in the specification, detailed descriptions of well-known functions or configurations would unnecessarily obfuscate the gist of the present invention, the detailed descriptions will be omitted.

Given the fact that various modifications of the present invention are possible, preferred embodiments of the present invention will be explained in this specification. However, these embodiments are not intended to limit the present invention to special forms. Rather, all changes that fall within the bounds of the present invention, or the equivalence of the bounds should be understood to be embraced by the present invention.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between," "directly between," "adjacent to," or "directly adjacent to," should be construed in the same way.

The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

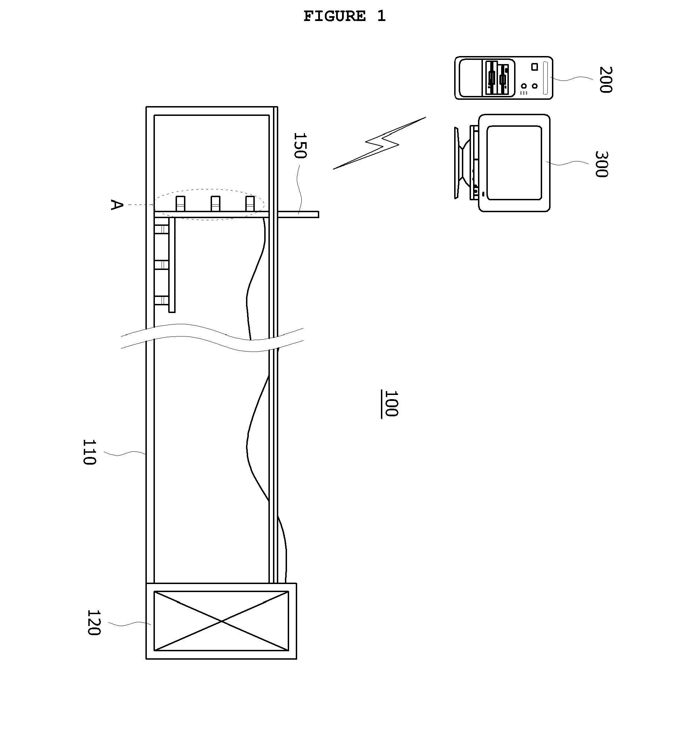

FIG. 1 is a view illustrating an experimental system for measuring wave force according to an embodiment of the present invention.

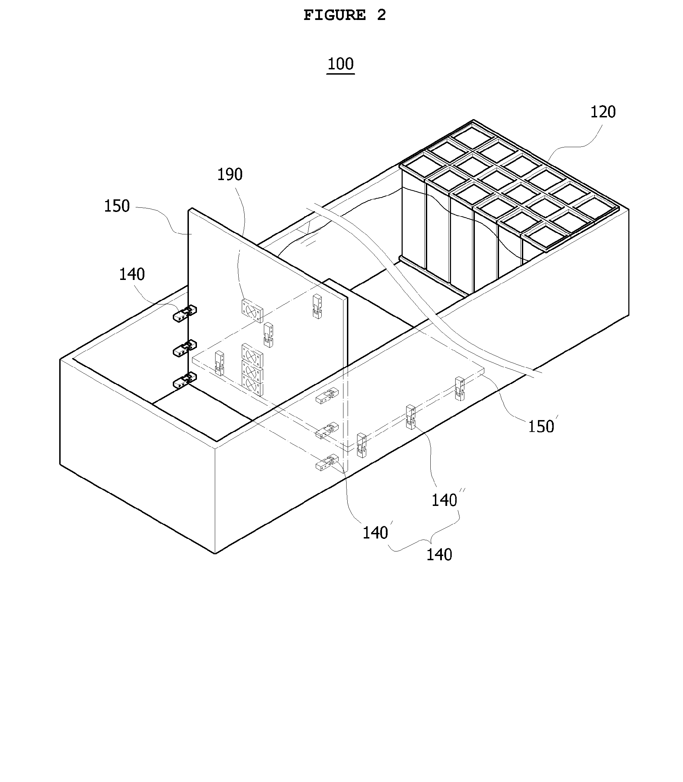

FIG. 2 is a perspective view of an experimental apparatus for measuring wave force shown in FIG. 1.

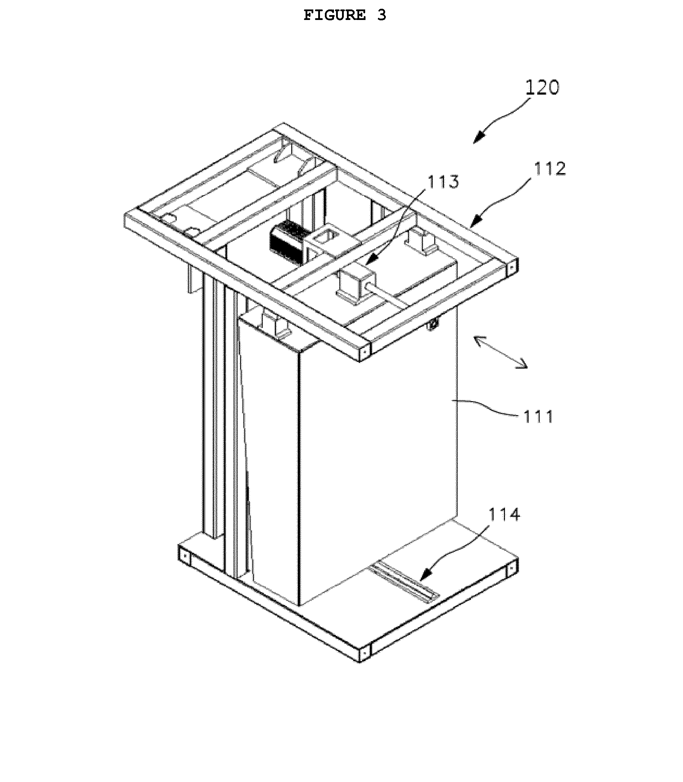

FIG. 3 is a view illustrating in detail a wave generator shown in FIG. 2.

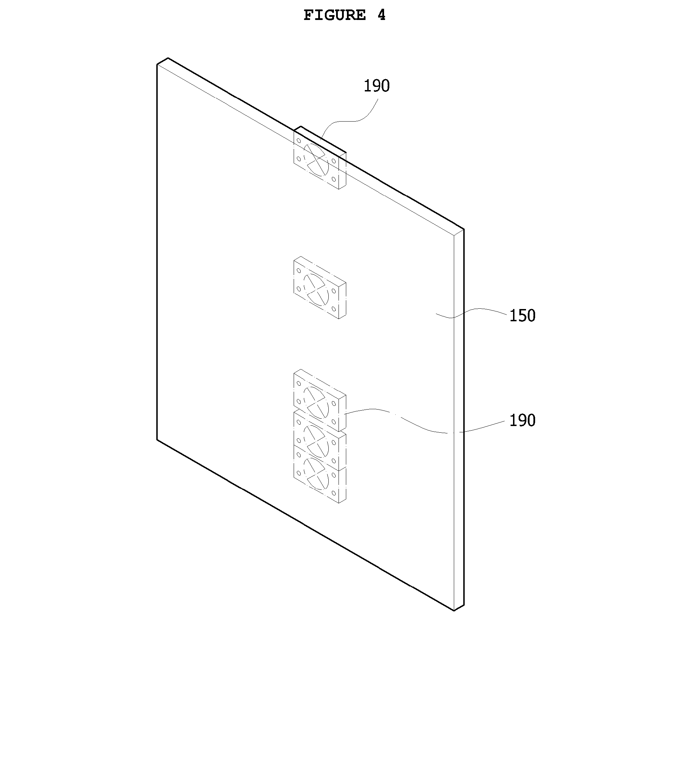

FIG. 4 is a view showing an embodiment of a wall provided with wave manometers according to the present invention.

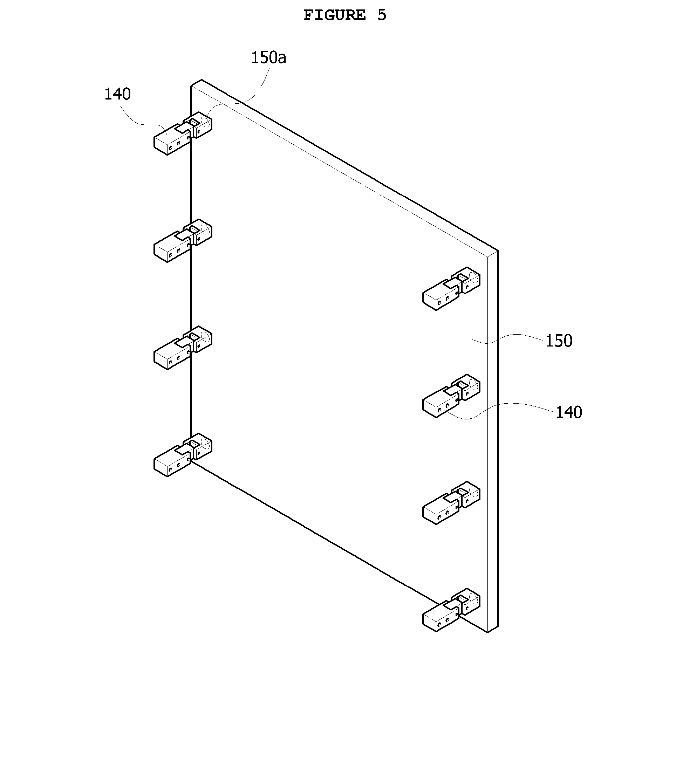

FIG. 5 is a view showing an embodiment of a wall provided with loads transducer according to the present invention.

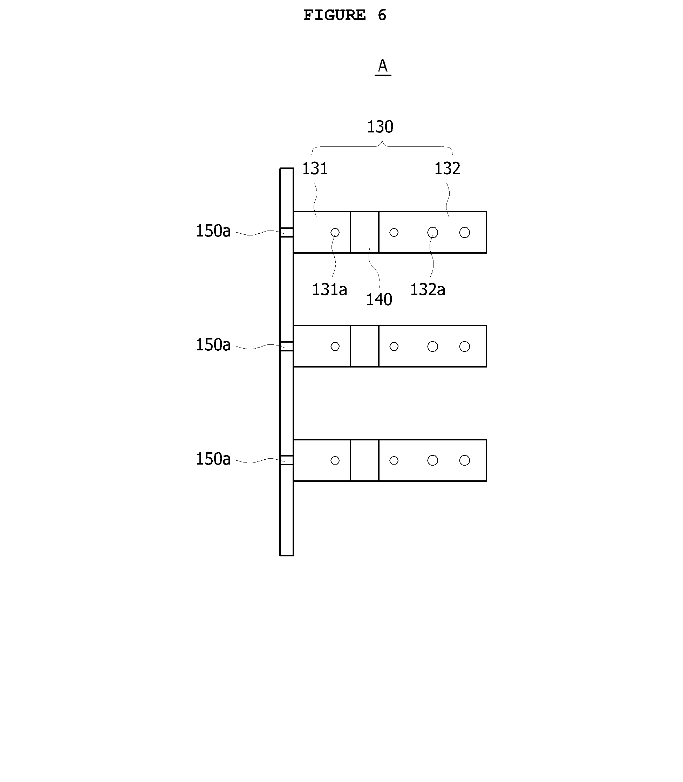

FIG. 6 is an enlarged view of portion A of FIG. 1.

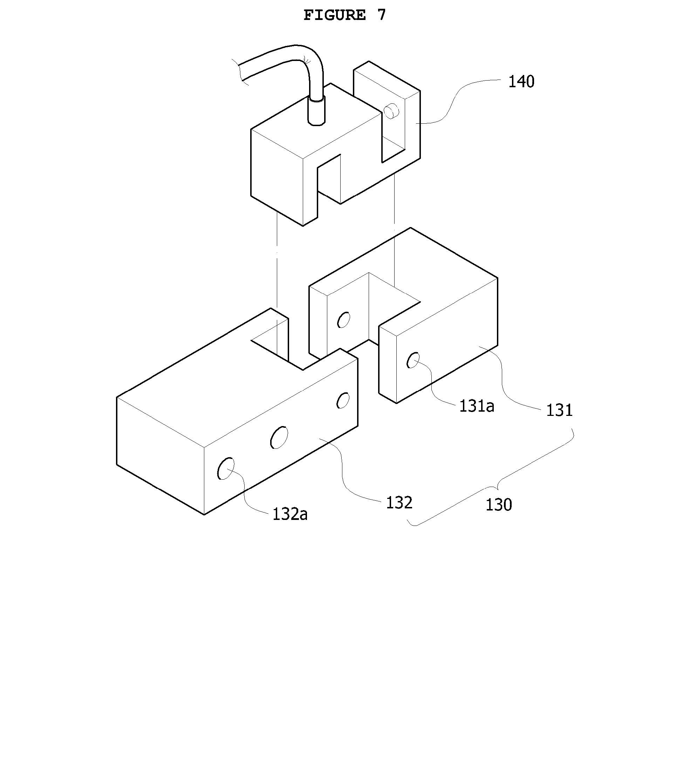

FIG. 7 is an enlarged view illustrating an loads transducer according to the present invention.

As shown in FIGS. 1 and 2, an experimental system 1000 for measuring wave force according to an embodiment of the present invention includes a wave force measurement apparatus 100, a load calculation unit 200 and a display unit 300.

The wave force measurement apparatus 100 includes a wave generation tank 110, a wave generator 120, a wall 150, a bottom (150'), an load transducer 140, a wave manometer 190, a load calculation unit 200 and a display unit 300.

Also, the load transducer 140 includes a plurality of horizontal load transducer 140' and a plurality of vertical load transducer 140".

The wave generation tank 110 contains water therein and extends a predetermined length in a direction to form a water channel such that waves move forward along the wave generation tank 110.

In detail, the wave generation tank 110 is manufactured such that water w contained therein can move in a direction along the wave generation tank 110. In this embodiment, the wave generation tank 110 has a length ranging from about 35 m to about 100 m and is made of glass or acryl.

If the wave generation tank 110 is made of transparent material, movement conditions of waves generated by the wave generator 120 can be easily observed. Furthermore, the wave generation tank 110 may be made of concrete or steel. In other words, the material of the wave generation tank 110 is not limited to a specific material.

At least one wave generator 120 is provided at a predetermined position in the wave generation tank 110. The wave generator 120 applies force to the water w contained in the wave generation tank 110, thus generating waves.

Preferably, the wave generator 120 is a piston type wave generator that can generate two-dimensional regular waves and irregular waves. It is preferable that the wave generator 120 be disposed on one end of the wave generation tank 110 and cover the entire width of the wave generation tank 110

More preferably, as shown in FIG. 3, a plurality of wave generators 120 are provided and configured such that they are individually or simultaneously controlled. Each wave generator 120 includes: a wave generation plate 111 that is installed in a depth direction of the wave generation tank 110, is repeatedly moved back and forth in the longitudinal direction of the wave generation tank 110 so as to generate waves, and is made of stainless steel (e.g. SUS 304L) or the like; a frame 112 supporting the wave generation plate 111; a wave-generation drive device 113 that is installed on the frame 112 and includes a motor and an actuating unit connected to the wave generation plate 111 so as to operate the wave generation plate 111; a controller (not shown) controlling the operation of the wave generation plate 111; and a wave-generation control PC and program.

The wave-generation drive device 113 includes a ball screw, a guide rail and a servo motor and is configured such that the wave generation plate 111 can linearly move. A separate lower guide device is provided under a lower end of the wave generation plate so that the wave generation plate can reliably linearly move even when a comparatively large load is applied thereto.

Preferably, a lower plate that is longer than the maximum stroke length of the wave generation plate is installed under the wave generation plate so that the wave generation plate 111 can be prevented from being affected by a wake stream when the wave generation plate 111 is operated.

The wall 150 is disposed on an opposite side to the wave generator 120 and may be configured in a form similar to that of a breakwater. Furthermore, the wall 150 may have an unspecified form. In detail, the wall 150 is disposed at a position spaced apart from the corresponding end of the wave generation tank 110 by a predetermined distance. Both a wave manometer 190 for measuring wave pressure and the horizontal load transducers 140' for measuring wave force or either of them is provided on the surface of the wall 150 in the longitudinal or lateral direction of the wall 150.

The wave manometer 190 or the horizontal load transducers 140' can be disposed on the surface of the wall 150 at a position desired by a user.

For reference, the wall 150 is modeled on a costal structure such as a breakwater, a shore protection wall, etc. The wall 150 is installed in the wave generation tank 110 and, more in detail, disposed in the end opposite to the end of the wave generation tank 110 at which the wave generator 120 is disposed.

The structure of the wall 150 installed in the wave generation tank 110 can be modified in a variety of forms depending on the height and shape of a costal structure to be installed on a real shore.

The vertical load transducers 140" can be disposed on the surface of the bottom 150' at a position desired by a user. Thus the vertical load transducer 140" measure a vertical load of the wave applied to a surface of the bottom 150'.

The load calculation unit 200 adds up wave pressures measured by the wave manometers 190 and the loads measured by the load transducers 140 and calculates the entire wave pressure and the entire load that are applied to the surface of the wall 150 provided with the wave manometers 190 and the load transducers 140.

The display unit 300 displays the result values calculated by the load calculation unit 200 so that an experimenter can easily view the result values.

The horizontal load transducers 140' are disposed on the perimeter or central portion of the rear surface of the wall 150. The wave manometers 190 are arranged on the front surface of the wall 150 in the longitudinal or lateral direction of the wall 150. Preferably, the horizontal load transducers 140' and the wave manometers 190 are disposed at positions corresponding to portions of the wall 150 that are desired for load measurement.

For example, if the horizontal load transducers 140' are arranged in the height direction on the perimeter of the rear surface of the wall 150, the horizontal load transducers 140' measure the load (e.g. wave force) of waves applied to surface areas of the portions of the wall 150 on which the horizontal load transducers 140' are disposed. More detailed description of each load transducer 140 will be omitted because it is a well-known technique.

Each horizontal load transducers 140' can be coupled both to the wall 150 and to the wave generation tank 110 by a coupling frame 130, and each vertical load transducers 140" are coupled to the bottom 150' and the wave generation tank 110 by a coupling frame 130.

The coupling frame 130 includes a first frame 131 configured to be coupled to a first end of the load transducer 140, and a second frame 132 that is coupled to a second end of the load transducer 140 and configured to have a symmetrical structure with the first frame 131.

The first frame 131 has in a side surface thereof at least one coupling hole (not shown) through which the first frame 131 is coupled to the inner surface of the wave generation tank 110 by a fastening member.

The second frame 132 has in an end thereof a coupling hole (not shown) through which the second frame 132 is coupled to the wall 150 by a fastening member.

The load calculation unit 200 adds up wave pressures measured by the wave manometers 190 and loads measured by the load transducers 140 and calculates the entire wave pressure and the entire load of waves applied to the surface of the wall 150.

The load calculation unit 200 includes a memory storing a calculation program for calculating the load (e.g. wave force) of waves. The load calculation unit 200 may include a computer decoding and recording medium for decoding the calculation program and recording the results.

The computer-decodable recording media individually have program commands, local data files, local data structures, etc. or have a combination of the above.

The recording media may be designed and configured specially for the embodiment of the present invention or, alternatively, may be a technique well-known to those in computer software related art.

Examples of the computer-decodable recording media include magnetic media such as a hard disk, a floppy disk or a magnetic tape, optical recording media such as a CD-ROM or a DVD, magnetic-optical media such as a floptical disk, and a hardware device such as a ROM, a RAM or a flash memory specially configured to store and conduct program commands. The recording media may be transmission media, such as an optical or metal wire or a waveguide, including a carrier wave for transmitting signals designating a program command, a local data structure, etc. Examples of the program commands may include not only a machine language code formed by a compiler but also a high-level language code that can be conducted by a computer using an interpreter or the like.

The display unit 300 functions to display result values obtained from the load calculation unit 200 for easy viewing by a user.

As described above, the experimental system 1000 for measuring wave force according to the embodiment of the present invention uses the wave manometers 190 and the load transducers 140, measures the load of waves by point or area unit, and then adds up the data. Therefore, an error range of the wave pressure and the load of the waves applied to the wall 150 can be minimized, whereby the load of waves can be more precisely evaluated.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An experimental system for measuring wave force, comprising:
a wave force measurement apparatus (100) comprising: a wave generation tank (110) containing water therein and extending a predetermined length to form a water channel such that a wave can move in a direction along the wave generation tank (110); a wave generator (120) generating the wave in the water contained in the wave generation tank (110); and a wall (150) disposed in the wave generation tank (110) on an opposite side to the wave generator (120) at a position spaced apart from a corresponding end of the wave generation tank (110), the wall (150) having a shape similar to a breakwater, with wave manometers (190) and load transducers (140) respectively provided on both sides of the wall (150), the wave manometers (190) measuring pressure of the wave, the load transducers (140) measuring force of the wave;
a load calculation unit (200) adding up pressures of the wave measured by the wave manometers (190) and loads of the wave measured by the load transducers (140) and calculating a load of the wave applied to a surface of the wall (150) on which the wave manometers (190) and the load transducers (140) are disposed; and
a display unit (300) indicating a result value calculated by the load calculation unit (200) to an experimenter.

2. An experimental system for measuring wave force, comprising:
a wave force measurement apparatus (100) comprising: a wave generation tank (110) containing water therein and extending a predetermined length to form a water channel such that a wave can move in a direction along the wave generation tank (110); a wave generator (120) generating the wave in the water contained in the wave generation tank (110); and a wall (150) disposed in the wave generation tank (110) on an opposite side to the wave generator (120) at a position spaced apart from a corresponding end of the wave generation tank (110), the wall (150) having a shape similar to a breakwater, with load transducers (140) provided on the wall (150), the load transducers (140) measuring force of the wave;
a load calculation unit (200) adding up loads of the wave measured by the load transducers (140) and calculating a load of the wave applied to a surface of the wall (150) on which the load transducers (140) are disposed; and
a display unit (300) indicating a result value calculated by the load calculation unit (200) to an experimenter.

3. The experimental system as set forth in claim 1, wherein the wave manometers (190) are arranged on a front side of the wall (150) in a longitudinal or lateral direction of the wall (150), each of the wave manometers (190) measuring pressure of the wave applied to a portion of the wall (150) on which the wave manometer (190) is disposed.

4. The experimental system as set forth in claim 1 or 2, wherein the load transducers (140) includes a plurality horizontal load transducer (140') and a plurality vertical load transducer (140"), the horizontal load transducers (140') are arranged on a perimeter or a central portion of a rear side of the wall (150) in a longitudinal or lateral direction of the wall (150), the horizontal load transducers (140) measuring the force of the wave applied to the surface of the wall (150), and the vertical load transducers (140") measure a vertical load of the wave applied to a surface of a bottom (150').

5. The experimental system as set forth in claim 4, wherein each of the horizontal load transducers (140') is coupled to the wall (150) and the wave generation tank (110) by a coupling frame (130), and each of the vertical load transducers (140") is coupled to the bottom (150') and the wave generation tank (110) by a coupling frame (130).

6. The experimental system as set forth in claim 5, wherein the coupling frame (130) comprises:
a first frame (131) coupled to a first end of the load transducer (140); and
a second frame (132) coupled to a second end of the load transducer (140), the second frame (132) having a shape symmetrical with the first frame (131).

7. The experimental system as set forth in claim 6, wherein the second frame (132) has in a side surface thereof at least one coupling hole (132a) through which the second frame (132) is coupled to an inner surface of the wave generation tank (110) by a fastening member.

8. The experimental system as set forth in claim 6, wherein the first frame (131) has in a side surface thereof a coupling hole through which the first frame (131) is coupled to the wall (150) by a fastening member.
